# EUROPÄISCHE PATENTANMELDUNG

(11) **EP 2 262 002 A2**
(43) Veröffentlichungstag der Anmeldung: **15.12.2010**
(21) Anmeldenummer: 10004871.9
(22) Anmeldetag: 07.05.2010
(51) Int. Cl.: H01L 31/042, E04H 6/02, F24J 2/52

(54) **Vorrichtung zum Tragen und Befestigen von Solarpaneelen**

(30) Priorität: 27.05.2009 DE 202009007525 U
(71) Anmelder: Eccoss GmbH, 55218 Ingelheim am Rhein (DE)
(72) Erfinder: Spanier, Karl, 55411 Bingen (DE)
(74) Vertreter: Grünecker, Kinkeldey, Stockmair & Schwanhäusser Anwaltssozietät

(57) **Zusammenfassung**

Die vorliegende Erfindung zeigt beschreibt ein Trägermodul (2) zum Befestigen von Solarpaneelen (5). Die Erfindung umfasst ein Verbinderprofil (7) zum Aufnehmen eines Solarpaneels (5) und ein Lagerprofil (6) zum Tragen des Verbinderprofils (7). Die Erfindung ist dadurch gekennzeichnet, dass das Verbinderprofil (7) auf dem Lagerprofil (6) schwenkbar gelagert ist.

## Beschreibung

Die vorliegende Erfindung betrifft eine Vorrichtung zum Tragen und Befestigen von Solarpaneelen.

Im häufiger werden Solarpaneele eingesetzt, um mit ihren Photovoltaikelementen umweltfreundlich Strom zu erzeugen. Dabei wird die Energie des Sonnenlichts in elektrischen Strom umgewandelt ohne ein Abfallprodukt auszuscheiden. Oft benutzen auch private Haushalte Photovoltaikelemente, um sich mit Strom zu versorgen. Dabei wird vor allem die Dachfläche genutzt, um auf ihr Solarpaneele zu befestigen. Auch kann man immer häufiger sehen, dass Firmen die meist großen Dachflächen ihrer Produktionshallen dazu nutzen, um darauf Solarpaneele anzubringen, wodurch sie für ihre Produktion Strom gewinnen oder den erzeugten Strom in das allgemeine Stromnetz einspeisen. Ebenso werden auch landwirtschaftliche Flächen genutzt, um Solarpaneele aufzustellen. Bei der Montage von Solarpaneelen wird besonderes darauf Rücksicht genommen, diese mit einem günstigen Winkel zur Sonneneinstrahlung aufzustellen. Solch ein günstiger Winkel kann bereits durch die Dachneigung oder durch Hanglage erzeugt werden.

Mittlerweile stellt man auch fest, dass Garagen und Carports zur Installation von Solarpaneelen genutzt werden. In der Regel ist es so, dass der Carport inklusive seiner Dachkonstruktion zunächst fertig gestellt wird. Im Anschluss werden dann Solarpaneele auf das Dach gebaut.

Normalerweise werden Solarpaneele beziehungsweise Photovoltaikmodule auf ein Carportdach gebaut, indem sie an zahlreichen Befestigungsstellen mit der Dachkonstruktion verschraubt sind. Vorzugsweise bietet das Dach zahlreiche Verstrebungen, woran Befestigungsbügel, Anker oder ähnliche Verbundmittel angebracht werden können. Diese Befestigungsmittel werden benutzt, um die Solarpaneele mit dem Dach fest zu verbinden. Vor allem werden Schraubverbindungen benutzt, um die Solarpaneele mit dem Dach und den Verbundmitteln zu befestigen.

Obwohl Solarpaneele heutzutage mit ausreichender Sicherheit und Festigkeitauf auf Carportdächern montiert werden, besteht ausreichend Optimierungspotential, um eine Kombination aus Carportdach und Solarpaneelen praktischer zu gestalten. Geht es darum, Solarpaneele schnell und kostengünstig mit einer Dachkonstruktion zu verbinden, bieten bekannte Vorrichtungen keine gute Lösung. Beim Einsatz zahlreicher Verbindungsmittel, wie zum Beispiel Schrauben, Anker oder Befestigungsbügel, nimmt die Traglast erheblich zu. Als Folge müssen oft zusätzliche konstruktive Mittel für die Carportkonstruktion eingesetzt werden, um das erhöhte Gewicht zu tragen.

Auch wenn man vermehrt Solarpaneele auf Carportdächern sehen kann, bleibt hinsichtlich des Zusammenbaus dennoch ein Verbesserungspotential. Aufgabe der vorliegenden Erfindung ist es daher, mit konstruktiv möglichst einfachen Mitteln eine Vorrichtung zum Tragen und Befestigen von Solarpaneelen beispielsweise auf Carportdächern zur Verfügung zu stellen, die angesichts eines einfachen, schnellen und sicheren Aufbaus, und eines wartungsarmen und zuverlässigen Betriebs optimiert ist.

Diese Aufgabe wird erfindungsgemäß gelöst durch eine Vorrichtung mit den Merkmalen des Anspruchs 1. Vorteilhafte Weiterbildungen der Erfindung sind in den Unteransprüchen gegeben.

Die vorliegende Erfindung besteht folglich in einer Vorrichtung zum Tragen und Befestigen von Solarpaneelen. Vorzugsweise wird diese erfindungsgemäße Vorrichtung bei Carportdächern verwendet. Die Vorrichtung beziehungsweise das Trägermodul umfasst ein Verbinderprofil zum Aufnehmen von Solarpaneelen. Das Verbinderprofil wird von einem Lagerprofil getragen, und ist wie das Lagerprofil im Gegensatz zum Stand der Technik vierseitig ausgeführt. Erfindungsgemäß ist vorgesehen, das Verbinderprofil auf dem Lagerprofil schwenkbar anzuordnen. Überraschenderweise hat sich gezeigt, dass eine derartige schwenkbare Anordnung keine zunehmende Komplexität der Gesamtvorrichtung fordert. Gleichzeitig bietet die Erfindung den Vorteil, dass bei der Montage unterschiedliche Neigungen für das Trägermodul eingestellt werden können, wodurch Regenwasser schnell abgeleitet werden kann und sich ein erwünschter Winkel zur Sonneneinstrahlung einstellt.

Von Vorteil wäre eine kostengünstige, einfache Lagerung zwischen dem Verbinderprofil und dem Lagerprofil. Dies wird ermöglicht, indem das Verbinderprofil oder das Lagerprofil einen konvexen Lagerabschnitt und das andere Profil einen komplementären konkaven Lagerabschnitt aufweist. Dabei ist es möglich das Verbinderprofil durch einfaches Aufsetzen bzw. Auflegen auf dem Lagerprofil zu lagern. Auf zusätzliche Komponenten kann bei der Lagerung verzichtet werden.

Um eine stabile Lagerung zu erhalten, gleichzeitig jedoch auch im Hinblick auf eine möglichst kompakte Bauweise ist es besonders günstig, wenn das Verbinderprofil einen gerundeten Auslauf und das Lagerprofil einen komplementären Aufnahmekanal umfasst. Dadurch wird auch erreicht, dass das Verbinderprofil vom Lagerprofil weich aufgenommen wird.

Um zu vermeiden, dass durch die Lagerung Unreinheiten beziehungsweise Feuchtigkeit von außen die Lagerung durchdringt, ist vorzugsweise eine Dichtung im Aufnahmekanal angeordnet.

Als besonders effizient hat sich für die Dichtung erwiesen, wenn sie als Rundschnurdichtung ausgebildet ist.

Vorzugsweise lässt sich die Lagerung der beiden Profile ohne großen Widerstand und große Momente schwenken. Dies wird erreicht, indem das Verbinderprofil und das Lagerprofil schwenkbar um eine Drehachse gelagert sind.

Für eine stabile Ausführung des Trägermoduls sollte ein Schwenkbereich definiert werden. Vorzugsweise schließt dieser Bereich einen Winkel von +/- 12° ein.

Um eine lange Lebensdauer des Trägermoduls zu erreichen, sollte die Vorrichtung stabil sein und es nicht zulassen, dass von außen Regenwasser eindringt. Für zusätzliche Stabilität, aber auch zum Schutz vor Regenwasser, kann eine Abdichtleiste eingesetzt werden.

Im Hinblick auf einen festen Zusammenhalt der Abdichtleiste mit dem Lagerprofil können Schrauben eingesetzt werden. Gleichzeitig ist es durch das Anschrauben der Abdichtleiste am Lagerprofil möglich, die Lagerung des Verbinderprofils zu sichern, ohne dabei zusätzliche Befestigungsmittel zu verwenden.

Insbesondere eine verstellbare Fixierung der Abdichtleiste, wobei sich die Position der Abdichtleiste an der Position des Verbinderprofils orientiert, ist von Vorteil, um eine zuverlässige Abdichtung für die Vorrichtung zu erreichen. Als besonders nützlich hat sich erwiesen, die Abdichtleiste mit einer Längsbohrung zu versehen, worin die Schrauben verschiebbar angeordnet werden können.

Zusätzlich kann die Abdichtleiste besonders einfach und stabil gelagert werden, wenn das Verbinderprofil einen Kragarm umfasst.

Vorzugsweise sollte es der Abdichtleiste im Anwendungsfall gestattet sein, sich in einem definierten Bereich zu bewegen. Gemäß einer Variante der Erfindung kann dieser bewegliche Bereich durch ein gebogenes Ende des Kragarms vorbestimmt werden.

Besonders vorteilhaft wäre es, wenn sich zwischen der Abdichtleiste und dem Kragarm keine Unreinheiten absetzen können. Ebenso ist es sinnvoll, die Abdichtleiste nicht direkt auf dem Kragarm anzubringen, wodurch sich beide Komponenten gegenseitig beschädigen könnten. Daher wird in einer Variante der Erfindung eine Andruckdichtung zwischen der Abdichtleiste und dem Kragarm des Verbinderprofils angeordnet. Ebenso unterstützt die Andruckdichtung auch ein mögliches Verschieben der Abdichtleiste entlang des Kragarms.

Auch wenn der Verbinderkörper geschwenkt wird, sollte die gesamte Vorrichtung stabil bleiben. Als besonders vorteilhaft hat sich erwiesen, dass der Kragarm zum gebogenen Ende hin gekrümmt geformt ist, wodurch sich der Kragarm im geschwenkten Zustand besonders stabil zeigt. Durch die Krümmung wird auch erreicht, dass sich der Kragarm um die zuvor erwähnte Drehachse schwenkt. Außerdem bietet die gekrümmte Form des Kragarms den Vorteil, dass die Andruckkraft in sämtlichen geschwenkten Stellungen des Verbinderprofils konstant bleibt, das heißt, selbst bei maximaler Neigung des Trägermoduls nimmt die Andruckkraft nicht zu.

Idealerweise sollte das Verbinderprofil fähig sein, weitere Komponenten an sich zu binden. Gemäß einer Variante der Erfindung kann dies erreicht werden, indem das Verbinderprofil einen Aufnahmeschacht umfasst.

Besonders vorteilhaft wäre eine einfache und kostengünstige Verbindung weiterer Komponenten mit dem Verbinderprofil. Für eine solche vorteilhafte Verbindung eignet sich insbesondere eine Befestigungsspur, die im Aufnahmeschacht angeordnet ist.

Vorzugsweise werden ebene Elemente eingesetzt, um Solarpaneele über eine große Fläche zu tragen. Erfindungsgemäß wird dies gelöst durch eine Schale, die mit dem Verbinderprofil verbunden ist.

Vorzugsweise sollte das Trägermodul so gestaltet sein, dass es sich mühelos und einfach montieren, aber auch demontieren lässt. Gemäß einer Variante der Erfindung wird dies erreicht, indem die Schale im Aufnahmekanal befestigt ist.

Um ausreichende Verbindungskräfte zwischen den Solarpaneelen und der Schale zu erreichen, ist es vorteilhaft, an der Schale ein Befestigungsmittel anzubringen. Um das Solarmodul auf einfache Art und Weise sicher mit der Schale zu verbinden, hat sich als besonders günstig ein Klebeband erwiesen. Durch das Klebeband ist es möglich das Solarpaneel vollflächig am Trägermodul zu befestigen. Dadurch lässt sich die Last der Solarpaneele günstig auf das Trägermodul übertragen.

Vorteilhaft ist es auch, wenn das Solarpaneel an seinen Kanten weich gelagert ist. Zweckmäßig ist es, eine dauerelastische Versiegelung zwischen der Kante des Solarpaneels und dem Verbinderprofil anzubringen. Dadurch wird auch erreicht, dass beim Schwenken des Verbinderprofils das Solarpaneel nicht verkantet.

Sofern es für erforderlich erachtet wird, könnte das Trägermodul zusätzlich eine Wärmedämmung umfassen. Vorzugsweise ist die Wärmedämmung unterhalb des Trägermoduls angeordnet. Diese Wärmedämmung verhindert, dass Wärme durch das Trägermodul nach außen weicht. Dadurch können die Komponenten des Trägermoduls auf einem gleichbleibenden Temperaturniveau gehalten werden. Dies hat zum Vorteil, dass keine Wärmedehnung der Trägermodulkomponenten stattfindet. Außerdem kann die Wärmedämmung die untere Seite des Trägermoduls auf eine ästhetische Art und Weise verkleiden. Schließlich könnte die Wärmedämmung des Trägermoduls bei einem Gebäude vorteilhaft sein, das normalerweise keine Wärmedämmung besitzt. Insbesondere bei einer Garage wäre so eine Wärmeisolierung möglich.

In einer weiteren Variante der Erfindung liegt das Solarpaneel auf einer Einfachverglasung auf. Dies bietet den Vorteil, dass die Auflagefläche zwischen Solarpaneel und tragendem Element maximiert ist.

Hohe Isolierwerte können auch erreicht werden, wenn das Trägermodul eine Isolierverglasung umfasst. Auf eine zusätzliche Dämmung könnte somit verzichtet werden.

Darüber hinaus können die Isolationseigenschaften des Trägermoduls optimiert werden, indem die Isolierverglasung mit dem Solarpaneel ein Vakuum zur Wärmeisolierung einschließt.

Im Idealfall wird ein wärmeisolierendes Vakuum durch einfache konstruktive Mittel gebildet. Gemäß einer Variante der Erfindung wird dies erreicht, indem lediglich Abstandhalter zwischen der Isolierverglasung und dem Solarpaneel angeordnet sind.

Zweckmäßig ist es auch, das Lagerprofil des Trägermoduls auf einfache Art und Weise mit Dachsparren verbinden zu können. Vorzugsweise werden dazu Schrauben verwendet.

Elektrische Leitungen, die den gewonnenen Strom leiten, sollten vorzugsweise nicht offen liegen. Um eine sichere Führung von elektrischen Leitungen zu gewährleisten, bietet das Trägermodul einen Installationskanal.

Im Idealfall lässt sich das Trägermodul beliebig oft erweitern. Eine derartige Erweiterung würde eine größere Fläche zur Verfügung stellen, die zur Energieerzeugung verwendet werden könnte. Eine Variante der Erfindung gestattet eine derartige Erweiterung, indem das Lagerprofil mit mehreren Aufnahmekanälen ausgestattet ist. Dadurch lassen sich mehrere Solarpaneele an das Lagerprofil anbinden.

Vorzugsweise ist eine aus den Solar- und Trägermodulen bestehende Dachhaut blickdicht und betretbar. Dabei erfüllt das Trägermodul in einer besonders günstigen Ausführung die Anforderungen einer Überkopfverglasung. Dadurch ist es möglich, dass das Solarpaneel bzw. -modul nicht die Anforderungen einer Überkopfverglasung erfüllen muss.

Besonderen Nutzen hat das Trägermodul in Verbindung mit einem Carport. Dabei bietet das Trägermodul die doppelte Funktion, sowohl eine stabile Dachfläche zu erzeugen, als auch auf einfache und sichere Art Solarpaneele zu tragen. Obwohl vorzugsweise die Erfindung sich mit einem Carport kombinieren lässt, können die Trägermodule auch in Verbindung mit anderen Vorrichtungen stehen.

Im Folgenden werden vorteilhafte Ausführungsbeispiele der Erfindung anhand einer Zeichnung näher erläutert. Im Einzelnen zeigen:
- Figur 1: erfindungsgemäße Trägermodule im Einsatz bei einem Carport,
- Figur 2: eine Trägermodulkopplung,
- Figur 3: eine Trägermodulkopplung mit beidseitig nach unten geschwenkten Solarpaneelen,
- Figur 4: eine Trägermodulkopplung mit beidseitig nach oben geschwenkten Solarpaneelen,
- Figur 5: eine Trägermodulkopplung mit einseitig nach unten geschwenktem Solarpaneel,
- Figur 6: eine Trägermodulkopplung mit einseitig nach oben geschwenktem Solarpaneel und einseitig nach unten geschwenktem Solarpaneel,
- Figur 7: eine Trägermodulkopplung mit Wärmedämmung,
- Figur 8: eine Trägermodulkopplung mit Einfachverglasung, und
- Figur 9: eine Trägermodulkopplung mit Luftspalt.

Gleiche Komponenten sind in den Figuren durchgängig mit gleichen Bezugszeichen versehen.

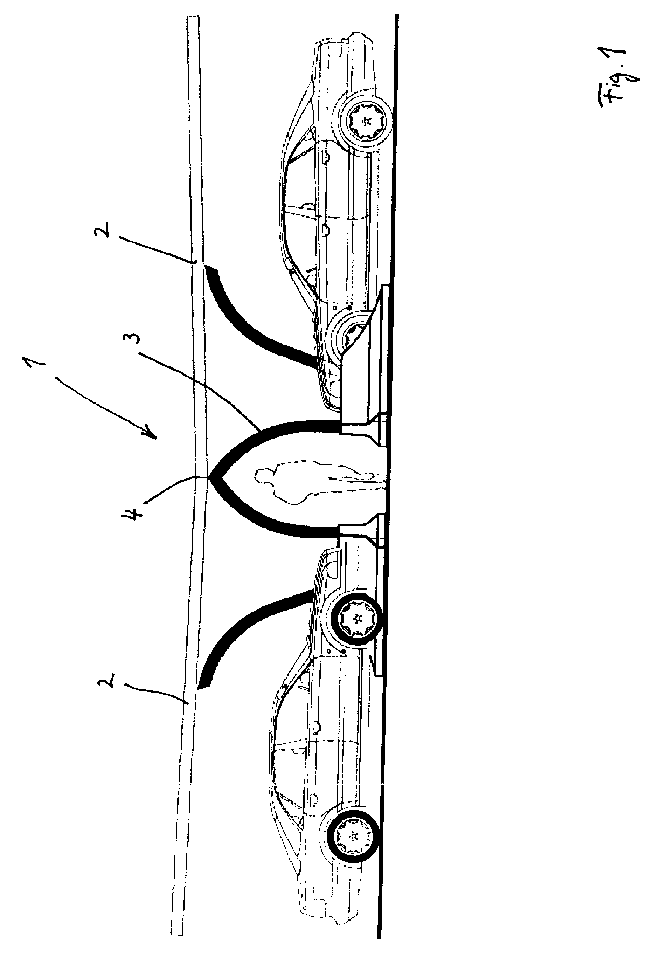

Figur 1 zeigt einen Carport 1, bei dem Trägermodule 2 auf tragenden Streben 3 angeordnet sind. Diese Streben können zum Beispiel Dachsparren sein. Um die Trägermodule 2 ausreichend fest miteinander zu verbinden, wird eine Trägermodulkopplung 4 ausgebildet. Diese Trägermodulkopplung 4 ermöglicht es, dass mehrere Trägermodule 2 miteinander verbunden werden können. Somit lässt sich auf einfache Art und Weise die Carportfläche vergrößern, wodurch auch eine vergrößerte Fläche für die Stromerzeugung entsteht.

Besonders die Trägermodulkopplung 4 zwischen den Trägermodulen 2 bietet der Carportdachkonstruktion technische Möglichkeiten, die in den folgenden Absätzen näher erläutert werden.

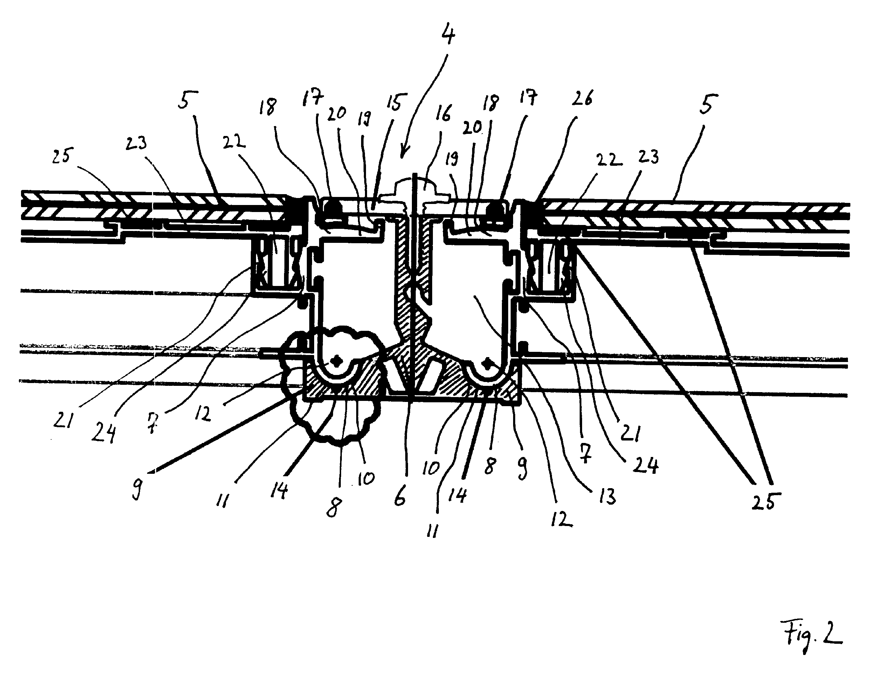

Figur 2 zeigt einen Querschnitt durch eine Trägermodulkopplung 4. Mehrere Trägermodule 2 werden über die Trägermodulkopplung 4 miteinander gekoppelt. Die Trägermodule 2 sind vorzugsweise gemäß den Anforderungen einer Überkopfverglasung ausgebildet. Zentrales Bauteil ist ein Lagerprofil 6. Das symmetrische Lagerprofil 6 ist dafür vorgesehen, ein beziehungsweise mehrere Verbinderprofile 7 zu tragen. Die Verbinderprofile 7 sind derartig auf dem Lagerprofil 6 angeordnet, dass sie sich links und rechts herum schwenken lassen. Das Verbinderprofil 7 liegt mit seinem konvexen Lagerabschnitt 8 in einem komplementären konkaven Aufnahmeabschnitt 9 des Lagerprofils 6. Um das Verbinderprofil 7 möglichst einfach auf dem Lagerprofil 6 zu lagern, besitzt das Verbinderprofil 7 einen gerundeten Auslauf 10 und das Lagerprofil 6 einen komplementären Aufnahmekanal 11. Die in der Figur 2 gezeigte Lagerung des Verbinderprofils 7 auf dem Lagerprofil 6 gewährleistet es, dass das Verbinderprofil 7 um eine Drehachse 12 schwenken kann.

Um zu verhindern, dass Feuchtigkeit in das Innere 13 der Trägermodulkopplung 4 eindringt, wird eine Dichtung 14 in dem Aufnahmekanal 11 des Lagerprofils 6 angebracht. Verwendet werden kann beispielsweise eine Rundschnurdichtung.

Dadurch, dass das Verbinderprofil 7 schwenkbar auf dem Lagerprofil 6 gelagert ist, kann das mit dem Verbinderprofil 7 verbundene Solarpaneel 5 ebenso geschwenkt werden. Es hat sich als nützlich erwiesen, dass ein Schwenkbereich von +/- 12⁰ eingehalten und durch Anschläge begrenzt wird.

Ebenso kann eine Abdichtleiste 15 mit dem Lagerprofil 6 verbunden werden. Die Abdichtleiste 15 wird mit einer Schraube 16 an das Lagerprofil 6 befestigt. Nicht gezeigt in Figur 2 ist, dass die Abdichtleiste 15 eine längliche Bohrung umfasst, wodurch die Abdichtleiste 15 entlang der Schraube 16 verschiebbar beweglich ist. Zusätzlich hilft die Abdichtleiste zu verhindern, dass Wasser, welches sich auf der Dachfläche ansammelt, in das Innere 13 der Trägermodulkopplung eindringt. Falls doch Wasser in das Innere 13 der Trägermodulkopplung 4 eindringen sollte, kann es auf dem Lagerabschnitt 8 abfließen.

Des Weiteren zeigt Figur 2, dass eine Andruckdichtung 17 zwischen der Abdichtleiste 15 und einem Kragarm 18 des Verbinderprofils 7 angeordnet ist. Diese Andruckdichtung 17 verhindert, dass die Abdichtleiste 15 direkt auf dem Kragarm 18 aufliegt, wodurch sich die Komponenten gegenseitig durch Reibung Schaden beifügen würden. Ebenso verhindert die Andruckdichtung 17 ein Eindringen von Wasser. Je nach geschwenktem Zustand des Verbinderprofils 7 wandert die Andruckdichtung 17 entlang des Kragarms 18. Beschränkt wird das Verschieben der Andruckdichtung 17 durch ein gebogenes Ende 19 des Kragarms 18. Weiterhin kennzeichnet sich der Kragarm durch eine gekrümmte Form 20 hin zum gebogenen Ende 19. Dieses geometrische Merkmai erlaubt es, dass auch der Kragarm 19 um die Drehachse 12 schwenkbar ist.

Das Verbinderprofil 7 bildet auch einen Aufnahmeschacht 21 aus. Dieser Aufnahmeschacht 21 umfasst eine Befestigungsspur 22. Zusammen mit der Befestigungsspur 22 kann der Aufnahmeschacht 21 eine zusätzliche Komponente an sich binden.

Gemäß der Erfindung wird an der Befestigungsspur 22 im Aufnahmeschacht 21 eine Schale 23 befestigt, die zum Tragen der Solarpaneele 5 dient. Diese können lastmäßig über ihre komplette Oberfläche auf der Schale 23 aufliegen. Die Schale 23 greift dabei mit ihren Vorsprüngen 24 in den Aufnahmeschacht 21 ein und garantiert somit eine ortsfeste Befestigung. Auf der Schale 23 werden Befestigungsmittel 25 angebracht, zum Beispiel Klebebänder, um die Solarpaneele 5 an sich zu binden. Damit das Solarpaneel 5 nicht direkt am Verbinderprofil 7 ankantet, wird eine dauerelastische Versiegelung 26 verwendet. Diese dauerelastische Versiegelung nimmt das Solarpaneel 5 schonend auf. Außerdem gleicht die dauerelastische Versiegelung 26 eine Wärmeausdehnung der Solarpaneele 5 aus.

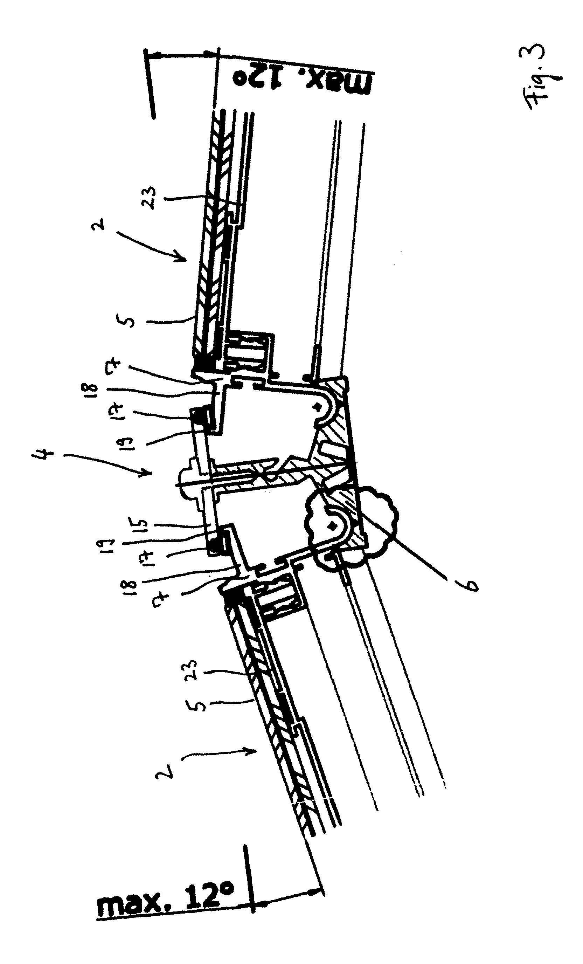

Figur 3 zeigt eine Trägermodulkopplung 4, wobei beide Trägermodule 2 nach unten geschwenkt sind. Dadurch wird erreicht, dass die auf der Schale 23 angebrachten Solarpaneele 5 in einen gewünschten Winkel geschwenkt werden. Dies wird beispielsweise gemacht, um auf der Oberfläche ein Gefälle zu erzeugen, damit Regenwasser abfließen kann. Außerdem kann somit ein zur Sonneneinstrahlung gewünschter Winkel erzeugt werden, wodurch sich effizient Strom durch Sonneinstrahlung generieren lässt. Die dargestellten Verbinderprofile 7 in der Figur 3 sind maximal nach unten geschwenkt. Die Andruckdichtung 17 wird durch die Abdichtleiste 15 maximal nach außen auf dem Kragarm 18 bewegt. Die Andruckdichtung 17 bewegt sich so lange entlang des Kragarms 18, bis sie an dem gebogenen Ende 19 anschlägt. Ist dieser Anschlag erreicht, haben sich die Solarpaneele 5 maximal geschwenkt. Dabei muss die Abdichtleiste 15 nicht verschoben werden. Obwohl sich eine andere Stellung der Trägermodule 2 eingerichtet hat im Vergleich zur Figur 2 , ist auch jetzt noch die gesamte Vorrichtung stabil, und so abgedichtet, dass kein Wasser in die Trägermodulkopplung 4 eindringen kann. Weil der Kragarm 18 um die Drehachse 12 geschwenkt wird und zum gebogenen Ende 19 hin eine gekrümmte Form 20 aufweist, die auch die Drehachse 12 als Krümmungsmittelpunkt hat, bleibt die Andruckkraft auf den Kragarm 18 konstant. Durch die gekrümmte Form 20 des Kragarms 18 wird zusätzlich erreicht, dass sich die Andruckdichtung 17 nicht zu sehr verformt. Eine zu starke Verformung der Andruckdichtung 17 könnte zu Rissen im Dichtungsmaterial führen.

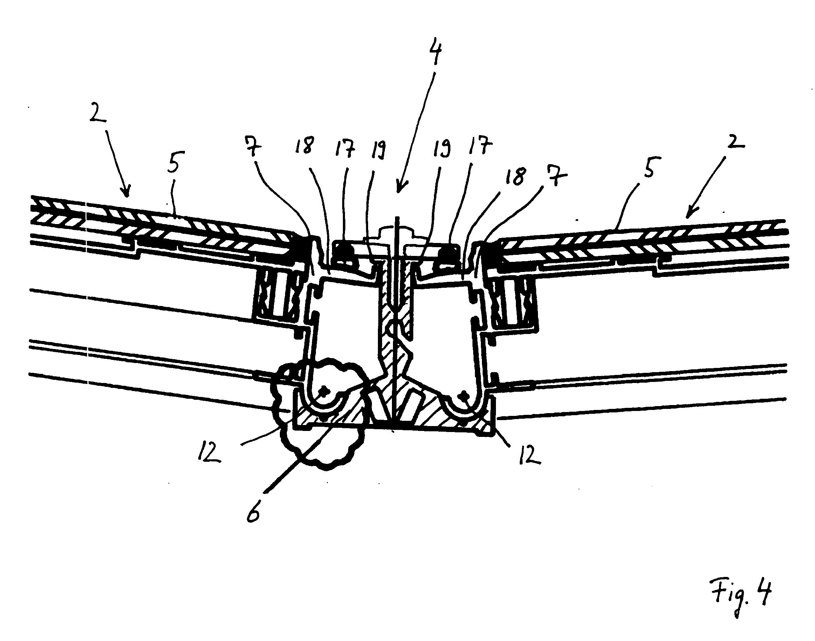

Entgegengesetzt zur Schwenkrichtung der Figur 3 werden bei der Figur 4 die Solarpaneele 5 nach oben geschwenkt. Dabei wandert die Andruckdichtung 17 vom gebogenen Ende 19 des Kragarms 18 weg. Eine maximal nach oben erreichte Schwenkung setzt ein, sobald das gebogene Kragarmende 19 am Lagerprofil 6 anstoßt. Auch bei dieser Schwenkung behalten die Trägermodule 2 eine stabile Anordnung. Die Drehachse 12, um die die Verbinderprofile 7 geschwenkt werden, bleibt gleich. Außerdem wird auch jetzt in der neu erreichten Stellung eine ausreichende Abdichtung gewährleistet. Durch eine derartige Stellung der Solarpaneele 5, die im Wesentlichen V-förmig ausgebildet ist, wird das Regenwasser, welches auf der Solarpaneeloberfläche auftrifft, zur Trägermodulkopplung 4 geleitet. Das Wasser kann dann auf dem Kragarm 18 des Verbinderkörpers 7 abfließen, ohne das vom Verbinderkörper 7 und den Lagerprofil 6 geschaffene Volumen einzudringen.

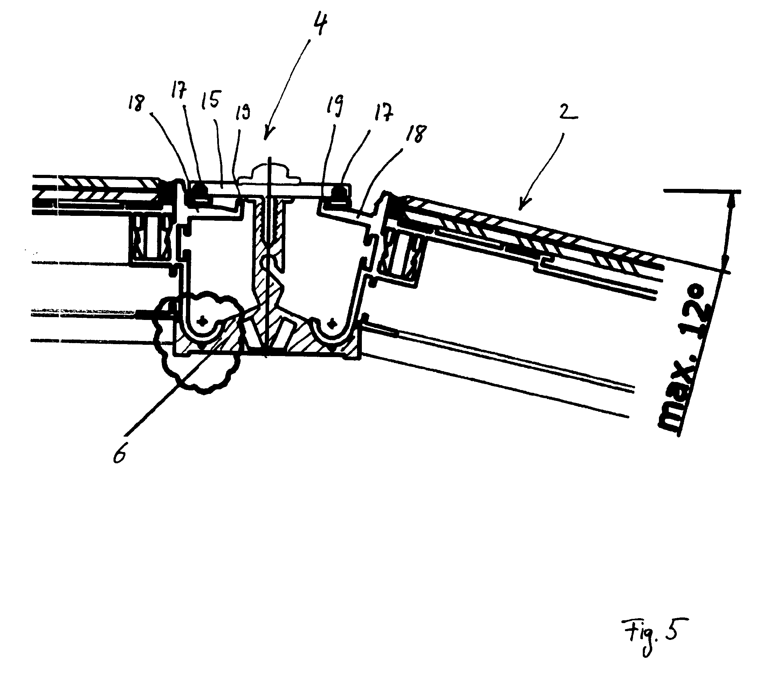

Ebenso kann in einem weiteren Ausführungsbeispiel nur ein Trägermodul 2 geschwenkt gelagert sein, während das andere Trägermodul 2 in horizontaler Lage befindet. Eine solche Anwendung wird gezeigt in Figur 5. Während bei dem geschwenkten Trägermodul 2 die Andruckdichtung 17 an das gebogene Ende 19 des Kragarms 18 anstößt, befindet sich die Andruckdichtung 17 beim horizontal gelagerten Trägermodul 2 am Ansatz des Kragarms 18. Wie bei den vorherigen Anwendungsbeispielen gezeigt wurde, ist auch hier die Abdichtleiste 15 nicht verschoben. Natürlich kann man beliebig wählen, welches der angrenzenden Trägermodule 2 schwenkbar gelagert ist und welches sich in einem horizontalen Zustand befindet.

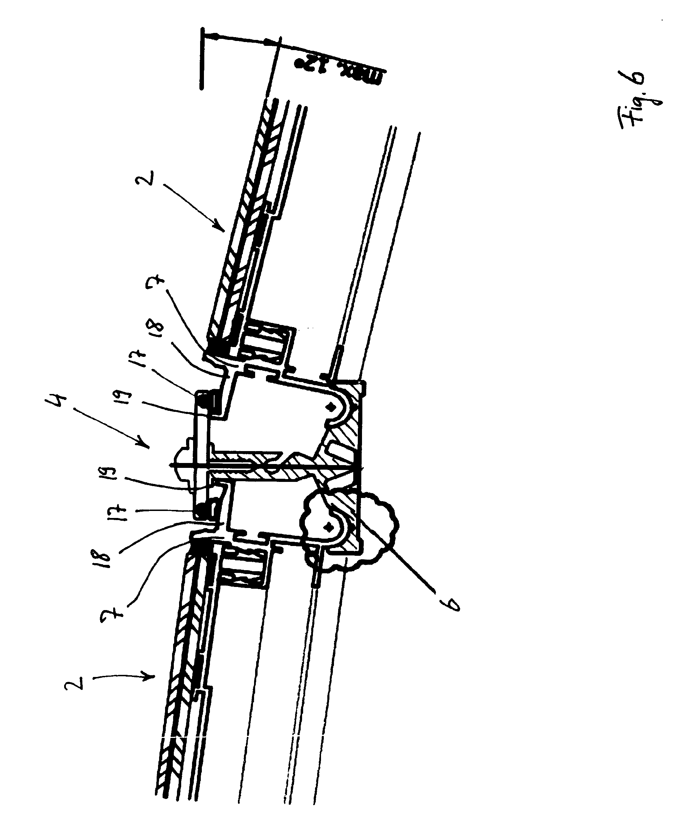

Des weiteren wird in Figur 6 gezeigt, wie zwei angrenzende Trägermodule 2 maximal geschwenkt werden, wobei eines sich nach oben schwenkt und sich das andere nach unten. Während sich beim nach oben geschwenkten Trägermodul 2 die Andruckdichtung 17 vom gebogenen Ende19 des Kragarms 18 wegbewegt, stößt sie beim nach unten geschwenkten Trägermodul 2 am gebogenen Ende 19 des Kragarms 18 an. Diese Anordnung kommt vor allem dann vor, wenn durch gekoppelte Trägermodule 2 erreicht werden soll, dass eine ineinander übergehende Dachschräge erreicht wird. Man könnte sich zum Beispiel vorstellen, dass eine Trägermodulanordnung gemäß Figur 6 auf einer Fabrikhalle angeordnet ist.

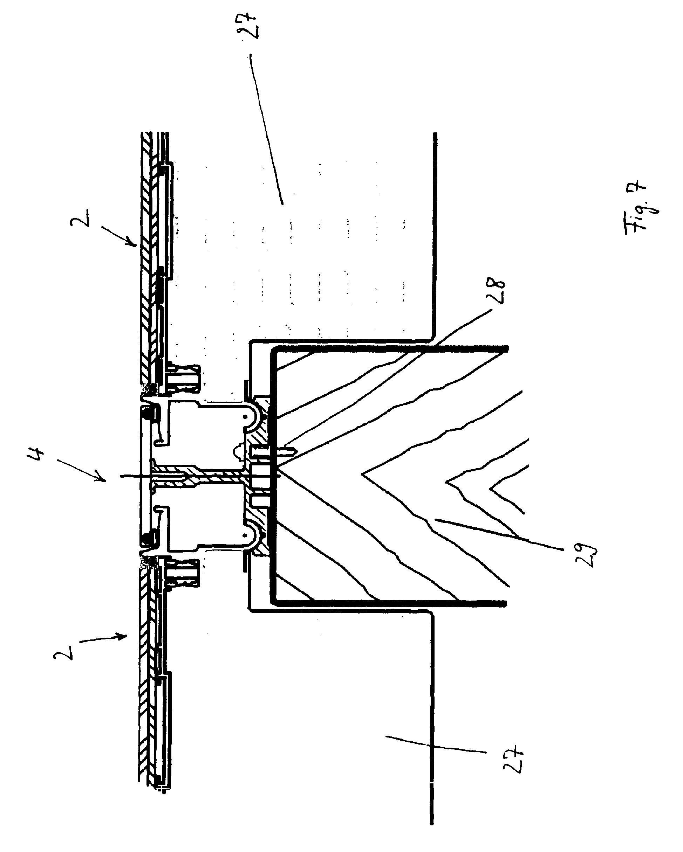

In der Figur 7 wird gezeigt, dass unter der Schale 23 eine Wärmedämmung 27 angebracht ist. Diese Wärmedämmung 27 gewährleistet zusätzliche Stabilität, bedeckt den von unten sichtbaren Bereich der Trägermodule 2, und verhindert Wärmedurchgang. Außerdem zeigt die Figur 7 dass das Lagerprofil 6 mit einer Schraube 16, 28 an einem Dachsparren 29 befestigt ist.

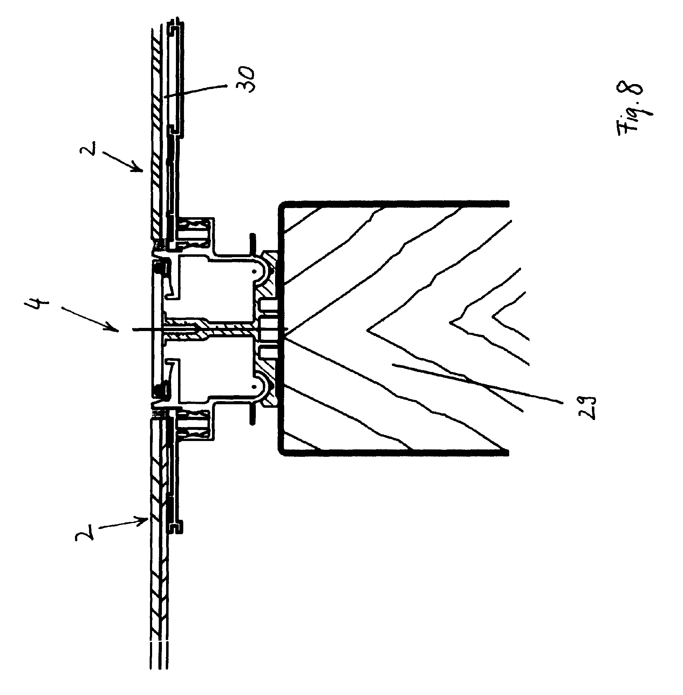

Wie es in der Figur 8 gezeigt wird, können die Trägermodule 2 auch eine Einfachverglasung 30 umfassen, die zwischen der Schale 23 und der Solarpaneele 5 angeordnet ist. Durch diese zwischengeschaltete Einfachverglasung 30 kann erreicht werden, dass die Solarpaneele 5 auf einer möglichst großen Fläche aufliegt. Somit ist das Trägermodul 2 stabiler.

Die Einfachverglasung 30 kann nach Wunsch auch als Isolierverglasung ausgebildet sein.

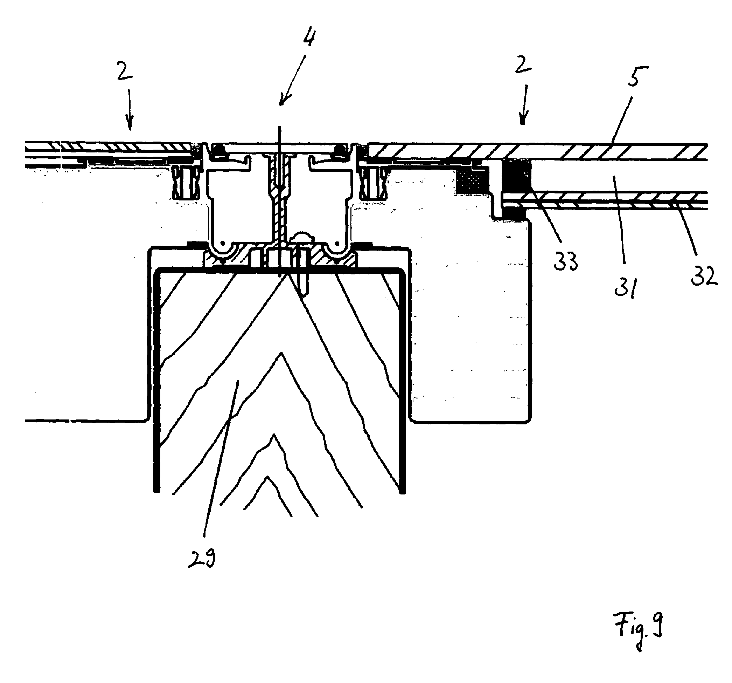

Figur 9 zeigt, dass eine Wärmeisolierung 27 auch durch einen Luftspalt 31 zwischen der Solarpaneele 5 und einer darunterliegenden Schicht 32 entstehen kann. Das Volumen des Luftspalts 31 wird bestimmt durch Abstandhalter 33, die zwischen der Solarpaneele 5 und der darunterliegenden Schicht 32 angeordnet sind.

Auch im zweiten Ausführungsbeispiel (Figur 7 bis Figur 9) ist das Schwenken der Trägermodule 2 möglich. Wie bei den anderen Ausführungsbeispielen können die miteinander gekoppelten Trägermodule 2 unabhängig voneinander geschwenkt werden. Dadurch kann man das Trägermodul 2 beziehungsweise mehrere Trägermodule 2 gemäß dem Verwendungszweck ausrichten.

Obwohl die Trägermodule 2 in den Figuren 1 bis 9 im gekoppelten Zustand gezeigt werden, kann ein Trägermodul 2 auch allein angewendet werden. Vorstellbar wäre ein Carport zur Überdachung von einem Fahrzeug. In diesem Fall würde es genügen, wenn von der dargestellten Trägermodulkopplung 4 nur die rechte oder linke Hälfte vorhanden wäre, so dass nur einseitig an der "Modulkopplung" ein Trägermodul 2 angebracht wäre.

## Patentansprüche

1. Trägermodul (2) zum Befestigen von Solarpaneelen (5), umfassend: ein Verbinderprofil (7) zum Aufnehmen eines Solarpaneels (5); und ein Lagerprofil (6) zum Tragen des Verbinderprofils (7), **dadurch gekennzeichnet, dass** das Verbinderprofil (7) auf dem Lagerprofil (6) schwenkbar gelagert ist.

2. Trägermodul nach Anspruch 1, **dadurch gekennzeichnet, dass** das Verbinderprofil (7) oder das Lagerprofil (6) einen konvexen Lagerabschnitt (8) und das andere Profil (7, 6) einen komplementären konkaven Aufnahmeabschnitt (9) aufweist.

3. Trägermodul nach Anspruch 1, **dadurch gekennzeichnet, dass** das Verbinderprofil (7) einen gerundeten Auslauf (10) umfasst, und das Lagerprofil (6) einen komplementären Aufnahmekanal (11) umfasst.

4. Trägermodul nach Anspruch 3, **dadurch gekennzeichnet, dass** der gerundete Auslauf (10) eine konvexe Rundung umfasst, und der Aufnahmekanal (11) eine komplementäre konkave Rundung umfasst.

5. Trägermodul nach Anspruch 3, **dadurch gekennzeichnet, dass** im Aufnahmekanal (11) eine Dichtung (14) angeordnet ist.

6. Trägermodul nach Anspruch 5, **dadurch gekennzeichnet, dass** die Dichtung (14) eine Rundschnurdichtung ist.

7. Trägermodul nach einem der vorangehenden Ansprüche, **dadurch gekennzeichnet, dass** das Verbinderprofil (7) um eine Drehachse (12) schwenkbar ist.

8. Trägermodul nach Anspruch 7, **dadurch gekennzeichnet, dass** das Verbinderprofil (7) in einem Bereich von +/- 12° schwenkbar ist.

9. Trägermodul nach einem der vorangehenden Ansprüche, **dadurch gekennzeichnet, dass** eine Abdichtleiste (15) an dem Lagerprofil (6) angeordnet ist.

10. Trägermodul nach Anspruch 9, **dadurch gekennzeichnet, dass** die Abdichtleiste (15) an dem Lagerprofil (6) mittels Schrauben (16) fixierbar ist.

11. Trägermodul nach Anspruch 10, **dadurch gekennzeichnet, dass** die Schrauben (16) in einer Längsbohrung der Abdichtleiste (15) verschiebbar angeordnet sind.

12. Trägermodul nach einem der vorangehenden Ansprüche, **dadurch gekennzeichnet, dass** das Verbinderprofil (7) einen Kragarm (18) umfasst.

13. Trägermodul nach Anspruch 12, **dadurch gekennzeichnet, dass** der Kragarm (18) ein gebogenes Ende (19) umfasst.

14. Trägermodul nach Anspruch 13, **dadurch gekennzeichnet, dass** eine Andruckdichtung (17) zwischen der Abdichtleiste (15) und dem Kragarm (18) des Verbinderprofils (7) angeordnet ist.

15. Trägermodul nach Anspruch 14, **dadurch gekennzeichnet, dass** die Andruckdichtung (17) sich entlang des Kragarms (18) verschieben lässt.

16. Trägermodul nach Anspruch 13, **dadurch gekennzeichnet, dass** der Kragarm (18) zum gebogenen Ende (19) hin gekrümmt geformt ist.

17. Trägermodul nach einem der vorangehenden Ansprüche, **dadurch gekennzeichnet, dass** das Verbinderprofil (7) einen Aufnahmeschacht (21) umfasst.

18. Trägermodul nach Anspruch 17, **dadurch gekennzeichnet, dass** der Aufnahmeschacht (21) eine Befestigungsspur (22) umfasst.

19. Trägermodul nach einem der vorangehenden Ansprüche, **dadurch gekennzeichnet, dass** eine Schale (23) mit dem Verbinderprofil (7) verbunden ist.

20. Trägermodul nach Anspruch 19, **dadurch gekennzeichnet, dass** die Schale (23) im Aufnahmeschacht (21) befestigt ist.

21. Trägermodul nach Anspruch 20, **dadurch gekennzeichnet, dass** das Solarpaneel (5) über ein Befestigungsmittel (25) mit der Schale (23) verbunden ist.

22. Trägermodul nach Anspruch 21, **dadurch gekennzeichnet, dass** das Befestigungsmittel (25) ein Klebeband ist.

23. Trägermodul nach einem der vorangehenden Ansprüche, **dadurch gekennzeichnet, dass** eine dauerelastische Versiegelung (26) das Solarpaneel (5) mit dem Verbinderprofil (7) verbindet.

24. Trägermodul nach einem der vorangehenden Ansprüche, **dadurch gekennzeichnet, dass** das Trägermodul (2) eine Wärmedämmung (27) umfasst.

25. Trägermodul nach einem der vorangehenden Ansprüche, **dadurch gekennzeichnet, dass** das Trägermodul (2) eine Einfachverglasung (30) umfasst.

26. Trägermodul nach einem der vorangehenden Ansprüche, **dadurch gekennzeichnet, dass** das Trägermodul (2) eine Isolierverglasung (34) umfasst.

27. Trägermodul nach Anspruch 26, **dadurch gekennzeichnet, dass** die Isolierverglasung (34) mit dem Solarpaneel (5) ein Vakuum (31) zur Wärmeisolierung einschließt.

28. Trägermodul nach Anspruch 27, **dadurch gekennzeichnet, dass** ein Abstandhalter (33) zwischen der lsolierverglasung (34) und dem Solarpaneel (5) angeordnet ist.

29. Trägermodul nach einem der vorangehenden Ansprüche, **dadurch gekennzeichnet, dass** das Lagerprofil (6) mittels Schrauben (28) an einem Dachsparren (29) befestigt wird.

30. Trägermodul nach einem der vorangehenden Ansprüche, **dadurch gekennzeichnet, dass** das Trägermodul (2) einen Installationskanal (35) für elektrische Leitungen umfasst.

31. Trägermodul nach einem der vorangehenden Ansprüche, **dadurch gekennzeichnet, dass** das Lagerprofil (6) mehrere Aufnahmekanäle (11) umfasst.

32. Dach, insbesondere für einen Carport (1), mit einem oder mehreren Trägermodulen (2) gemäß einem der vorangehenden Ansprüche 1 bis 31.
